(19) Europäisches Patentamt
European Patent Office
Office européen des brevets

(11) **EP 2 387 820 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **09765067.5**

(22) Anmeldetag: **24.11.2009**

(51) Int Cl.:
**H02M 7/483** (2007.01)

(86) Internationale Anmeldenummer:
**PCT/EP2009/065749**

(87) Internationale Veröffentlichungsnummer:
**WO 2010/078999 (15.07.2010 Gazette 2010/28)**

(54) **WANDLERVORRICHTUNG UND VERFAHREN ZUM STEUERN EINER WANDLERVORRICHTUNG**

CONVERTER DEVICE AND METHOD FOR CONTROLLING A CONVERTER DEVICE

DISPOSITIF CONVERTISSEUR ET PROCÉDÉ DE COMMANDE D'UN DISPOSITIF CONVERTISSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.12.2008 EP 08172209**

(43) Veröffentlichungstag der Anmeldung:
**23.11.2011 Patentblatt 2011/47**

(73) Patentinhaber: **ABB Research Ltd.**
**8050 Zürich (CH)**

(72) Erfinder:
• **HAEDERLI, Christoph**
**CH-8047 Zürich (CH)**
• **CHAUDHURI, Toufann**
**CH-1110 Morges (CH)**

(74) Vertreter: **ABB Patent Attorneys**
**C/o ABB Schweiz AG**
**Intellectual Property (CH-LI/IP)**
**Brown Boveri Strasse 6**
**5400 Baden (CH)**

(56) Entgegenhaltungen:
**WO-A1-2008/136977      US-A- 5 644 483**
**US-A- 6 005 788      US-A- 6 104 624**
**US-B1- 6 459 596**

EP 2 387 820 B1

**Beschreibung**

**Technisches Gebiet**

Die Erfindung betrifft Spannungswandler, insbesondere Wechselrichter, die aus einer Mehrzahl von Gleichspannungsquellen Wechselspannungen generieren.

**Stand der Technik**

Es sind bislang vielfältige Formen von Spannungswandlern, wie z.B. Wechselrichter zum Bereitstellen einer oder mehrerer Wechsel- bzw. Phasenspannungen bekannt. Beispiele für Wechselrichter-Topologien sind ANPC (active neutral point clamped), NPC (neutral point clamped) oder MPC, kaskadierte H-Brücken und dergleichen mit jeweils spezifischen Eigenschaften. Bei vielen Topologien von Wechselrichtern existiert eine Schalteinheit, bei der hohe Spannungen im Bereich des bereitzustellenden Spannungshubs der Ausgangsspannung mit einer hohen Frequenz geschaltet werden müssen, um die gewünschten Spannungsverläufe an den Ausgängen des Wechselrichters bereitzustellen. Dies erfordert eine entsprechende Dimensionierung der verwendeten Leistungsbauelemente, wodurch die herkömmlichen Topologien von Wechselrichtern aufwändig zu realisieren sind.

Weiterhin weist ein Teil der herkömmlichen Wechselrichter Zwischenkreiskondensatoren auf, um Zwischenpunktspannungen bereitzustellen, mit denen mehrere Spannungspegel für den Betrieb des Wechselrichters bereitgestellt werden können. Diese Kondensatoren sind in der Regel anfällig für Alterung, sodass die Lebensdauer derartiger Wechselrichter begrenzt ist.

In der US 6,104,624 ist eine gattungsgemässe Wandlervorrichtung nach dem Stand der Technik angegeben, welche zwei Auswahlelemente aufweist, an die jeweils nur ein einziges Zwischenspannungspotenzial angelegt ist und beider jedes Auswahlelement dann nur dieses eine Zwischenspannungspotenzial zum Ausgeben als jeweiliges Ausgangsspannungspotenzial auswählen kann. Ferner zum Stand der Technik gehört die Wandlervorrichtung in "Multilevel converters for single-phase grid connected photovoltaic systems-an overview", Calais M. et al, ISIE 1998 sowie die Umrichterschaltung der US 2008/0150366 A1.

**Darstellung der Erfindung**

Es ist Aufgabe der vorliegenden Erfindung, einen Wechselrichter zur Verfügung zu stellen, der insbesondere mit einer Mehrzahl einzelner Spannungsquellen betrieben werden kann. Weiterhin ist es Aufgabe der vorliegenden Erfindung, ein Verfahren zum Betreiben eines derartigen Wechselrichters zur Verfügung zu stellen.

Diese Aufgabe wird durch die Wandlervorrichtung gemäß Anspruch 1 sowie durch die Wandleranordnung und das Verfahren zum Betreiben der Wandlervorrichtung gemäß den nebengeordneten Ansprüchen gelöst.

Weitere vorteilhafte Ausgestaltungen der Erfindung sind in den abhängigen Ansprüchen angegeben.

Gemäß einem ersten Aspekt ist eine Wandlervorrichtung zum Bereitstellen von mehreren Ausgangsspannungen bzw. mehreren Ausgangsspannungspotenzialen an entsprechenden Ausgängen vorgesehen. Die Wandlervorrichtung umfasst:

- mehrere Einstelleinheiten, die jeweils einer von mehreren Eingangsspannungsquellen zugeordnet sind, wobei jede der Einstelleinheiten ausgebildet ist, um eine von der zugeordneten Eingangsspannungsquelle bereitgestellte Eingangsspannung zu variieren und eine Zwischenspannung bereitzustellen; und
- mehrere Auswahlelemente, wobei an jedes Auswahlelement durch die Zwischenspannungen definierte Zwischenspannungspotenziale angelegt sind und jedes Auswahlelement ausgebildet ist, eines der Zwischenspannungspotenziale zum Ausgeben als das jeweilige Ausgangsspannungspotenzial auszuwählen.

Der Kern der obigen Wandlervorrichtung besteht darin, mehreren Eingangsspannungsquellen Einstelleinheiten zuzuordnen, um die variablen Zwischenspannungen zu erzeugen. Mithilfe von Auswahlelementen wird für jedes bereitzustellende Ausgangsspannungspotenzial ein entsprechendes Zwischenspannungspotenzial, das von den Einstelleinheiten bereitgestellt wird, ausgewählt und das Zwischenspannungspotenzial als das bereitzustellende Ausgangsspannungspotenzial bereitgestellt. Bei einer derartigen Wandlervorrichtung können somit die Spannungsverläufe an jedem der Ausgänge durch abschnittsweises Zusammensetzen der von den Einstelleinheiten bereitgestellten Verläufe der Zwischenspannungspotenziale gebildet werden. Die Auswahlelemente haben dabei lediglich die Funktion des Durchschaltens eines von einer der Einstelleinheiten bereitgestellten Zwischenspannungspotenzials an einen der Ausgänge. Die eigentliche Funktion des Bereitstellens des gewünschten Zwischenspannungspotenzials wird für jede Eingangsspannungsquelle durchgeführt. Aufgrund der dort vorliegenden niedrigeren Spannungen sind die Anforderungen an die Leistung bzw. an die Dimensionierung der dort verwendeten Bauelemente geringer.

Weiterhin können Spannungsausgänge der Einstelleinheiten seriell miteinander verbunden sein, so dass sich die Zwischenspannungen addieren und an einem Teil oder jedem der Spannungsausgänge das jeweilige Zwischenspannungspotenzial zur Auswahl durch ein entsprechendes der Auswahlelemente bereitgestellt wird.

Gemäß einem weiteren Aspekt ist eine Wandleranordnung mit der obigen Wandlervorrichtung und mit einer Steuereinheit vorgesehen. Die Steuereinheit ist ausgebildet, um die mehreren Einstelleinheiten anzusteuern, so dass die Einstelleinheiten Zwischenspannungspotenziale bereitstellen, die die bereitzustellenden Ausgangsspannungspotenziale enthalten, wobei die Steuereinheit weiterhin ausgebildet ist, um jeweils eines der Zwischenspannungspotenziale auszuwählen und an einem entsprechenden Ausgang bereitzustellen.

Gemäß einer Ausführungsform ist die Steuereinheit ausgebildet, um die Auswahlelemente anzusteuern, so dass das niedrigste von den Einstelleinheiten bereitgestellte Zwischenspannungspotenzial zum Bereitstellen des niedrigsten Ausgangsspannungspotenzials und das höchste von den Einstelleinheiten bereitge-stellte Zwischenspannungspotenzial zum Bereitstellen des höchsten Ausgangsspannungspotenzial ausgewählt wird.

Weiterhin kann die Steuereinheit ausgebildet sein, um die Einstelleinheiten anzusteuern, so dass bei in Reihe verschalteten Zwischenspannungen die addierten Zwischenspannungen eine Spannung ergeben, die der Spannung zwischen dem höchsten bereitzustellenden Ausgangsspannungspotenzial und dem niedrigsten bereitzustellenden Ausgangsspannungspotenzial entspricht.

Insbesondere kann die Steuereinheit ausgebildet sein, um die Einstelleinheiten anzusteuern, so dass ein mittleres der Ausgangsspannungspotenziale durch Auswählen eines der mittleren Zwischenspannungspotenziale bereitgestellt wird.

Es kann vorgesehen sein, dass die Steuereinheit ausgebildet ist, um die Einstelleinheiten anzusteuern, so dass das mittlere Zwischenspannungspotenzial an einem ausgewählten Spannungsausgang einer der Einstelleinheiten generiert wird.

Die Steuereinheit kann ausgebildet sein, um den Spannungsausgang einer der Einstelleinheiten abhängig von einer gewünschten Lastverteilung der den Einstelleinheiten zugeordneten Eingangsspannungsquellen auszuwählen, wobei insbesondere das Verhältnis der Zwischenspannungen der einzelnen Einstelleinheiten der Lastverteilung der entsprechenden Einstelleinheiten entspricht.

Gemäß einer Ausführungsform kann die Steuereinheit ausgebildet sein, um den Spannungsausgang einer der Einstelleinheiten auszuwählen, indem die Spannungsdifferenz zwischen dem höchsten und dem niedrigsten Ausgangsspannungspotenzial durch die Anzahl der verfügbaren Einstelleinheiten dividiert wird und der Spannungsausgang derjenigen Einstelleinheit zum Bereitstellen eines der mittleren Ausgangsspannungspotenziale ausgewählt wird, der dem bereitzustellenden Ausgangsspannungspotenzial am nächsten liegt.

Die Steuereinheit kann insbesondere ausgebildet sein, um die Einstelleinheiten anzusteuern, so dass das mittlere Zwischenspannungspotenzial generiert wird, indem eine erste Gruppe von einer oder mehreren Einstelleinheiten, die zwischen dem ausgewählten Spannungsausgang und dem Spannungsausgang des höchsten Zwischenspannungspotenzials angeordnet sind, jeweils eine Zwischenspannung bereitstellen, die der Spannungsdifferenz zwischen dem bereitzustellenden Ausgangsspannungspotenzial und dem höchsten bereitzustellenden Ausgangsspannungspotenzial dividiert durch die Anzahl der Einstelleinheiten der ersten Gruppe entspricht, und indem eine zweite Gruppe von Einstelleinheiten, die zwischen dem ausgewählten Spannungsausgang und dem Spannungsausgang des niedrigsten Zwischenspannungspotenzials angeordnet sind, jeweils eine Zwischenspannung bereitstellen, die der Spannungsdifferenz zwischen dem bereitzustellenden Ausgangsspannungspotenzial und dem niedrigsten bereitzustellenden Ausgangsspannungspotenzial dividiert durch die Anzahl der Einstelleinheiten der zweiten Gruppe entspricht.

Gemäß einer Ausführungsform kann die Steuereinheit ausgebildet sein, um zum Bereitstellen der Ausgangsspannungen das Variieren der Zwischenspannungen der Einstelleinheiten zyklisch oder kontinuierlich durchzuführen, so dass die Zwischenspannungen kontinuierlich oder in aufeinanderfolgenden Zeitfenstern bereitgestellt werden.

Gemäß einem weiteren Aspekt ist ein Verfahren zum Betreiben der obigen Wandlervorrichtung vorgesehen. Das Verfahren umfasst folgende Schritte:

- Ansteuern der mehreren Einstelleinheiten, so dass die Einstelleinheiten Zwischenspannungspotenziale bereitstellen, die die bereitzustellenden Ausgangsspannungspotenziale enthalten,
- Ansteuern der Auswahlelemente, so dass jeweils eines der Zwischenspannungspotenziale ausgewählt und an einem entsprechenden Ausgang bereitgestellt wird.

**Kurze Beschreibung der Zeichnungen**

Ausführungsformen der Erfindung werden nachfolgend anhand der beigefügten Zeichnungen näher erläutert. Es zeigen:

Fig. 1     eine schematische Darstellung eines Wechselrichters mit vier Gleichspannungsquellen und drei Ausgängen, an denen Ausgangsspannungspotenziale bereitgestellt werden;

Fig. 2 eine schematische Darstellung einer möglichen Ausführung einer Einstelleinheit des Wechselrichters der Fig. 1;

Fig. 3 die Verläufe von drei Ausgangsspannungen und die Zwischenspannungspotenziale der einzelnen Einstelleinheiten als Beitrag zur Generierung der jeweiligen Phasenspannung.

**Wege zur Ausführung der Erfindung**

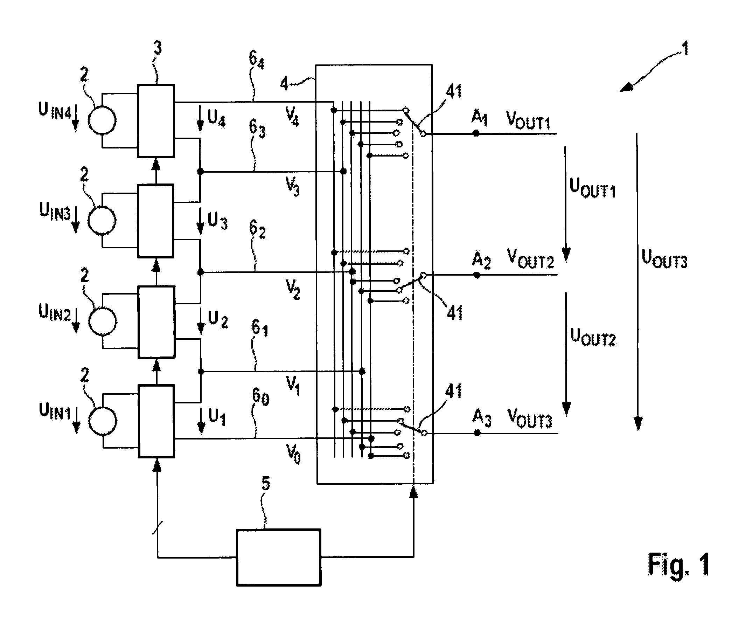

Fig. 1 zeigt eine schematische Darstellung eines Mehrpegel-Dreiphasen-Wechselrichters 1 als Beispiel einer Wandlervorrichtung gemäß der Erfindung.

Der Wechselrichter 1 wird durch eine Anzahl von Eingangsspannungsquellen 2 versorgt. Die Eingangsspannungsquellen 2 können beispielsweise Gleichspannungsquellen in Form von Solarzellen, Brennstoffzellen, Generatoren, Batterien und dgl. aufweisen. Im gezeigten Ausführungsbeispiel werden vier Eingangsspannungsquellen 2 verwendet. Es können jedoch auch eine beliebige andere Anzahl von Eingangsspannungsquellen verwendet werden. Die Eingangsspannungsquellen 2 stellen jeweils eine Eingangsspannung $U_{IN1}$ bis $U_{IN4}$ bereit.

Die Eingangsspannungsquellen 2 können jeweils mehrere einzelne Einzelspannungsquellen umfassen, die seriell und/oder parallel verschaltet sind. Insbesondere können die Eingangsspannungsquellen 2 eine Parallelschaltung von mehreren Reihenschaltungen mit mehreren Einzelspannungsquellen umfassen. Die Reihenschaltungen können zur Entkopplung durch geeignete Induktivitäten miteinander verbunden sein. Die Induktivitäten können als separate Bauteile ausgeführt sein, oder aber als reine Streüinduktivität, d.h. durch Leitungen entsprechender Länge, ausgeführt sein.

Jede der Eingangsspannungsquellen 2 ist mit einer zugeordneten Einstelleinheit 3 verbunden, die aus der jeweils bereitgestellten Eingangsspannung $U_{IN1}$ bis $U_{IN4}$ eine entsprechende variable Zwischenspannung $U_1$ bis $U_4$ generiert. D.h., die Einstelleinheit 3 kann aus der bereitgestellten Eingangsspannung $U_{IN1}$ bis $U_{IN4}$ eine Zwischenspannung im Bereich zwischen 0 und $U_{INn}$ (n=1..4) gemäß einer Vorgabe von einer Steuereinheit 5 generieren.

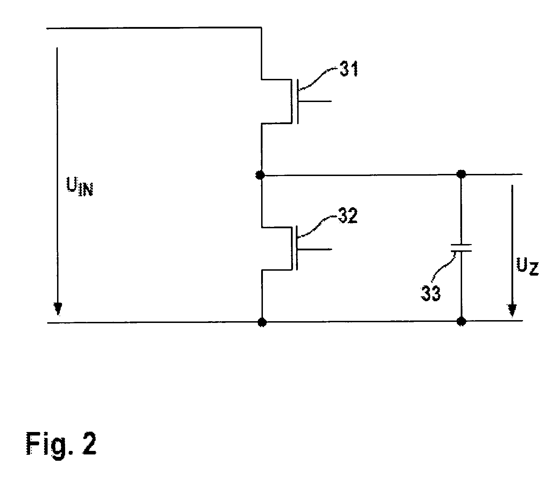

In Fig. 2 ist eine mögliche Ausgestaltung einer solchen Einstelleinheit 3 dargestellt, wie sie in dem Wechselrichter der Fig. 1 verwendet werden kann. Fig. 2 zeigt eine einfache Inverterschaltung mit einem ersten Leistungsschalter als Pull-High-Transistor 31 und einem zweiten Leistungsschalter als Pull-Low-Transistor 32, die separat ansteuerbar sind. Durch wechselweises Ein- und Ausschalten der Transistoren 31, 32 z.B. mithilfe einer Pulsweitenmodulation lässt sich aus der anliegenden Eingangsspannung $U_{IN}$ eine entsprechende Spannung als Zwischenspannung $U_Z$ ( $U_1$ — $U_4$) generieren. Ein Kondensator 33 kann zum Glätten der bereitgestellten Zwischenspannung $U_Z$ vorgesehen sein.

Im gezeigten Wechselrichter sind die durch die Einstelleinheiten 3 bereitgestellten Zwischenspannungen $U_1$ bis $U_4$ seriell verschaltet. Durch die serielle Verschaltung der Zwischenspannungen $U_1$ bis $U_4$ ergibt sich eine Spannungsleiter mit den Zwischenpotenzialen $V_0$ bis $V_4$, die über entsprechende Zwischenpunktleitungen $6_0$ — $6_4$ einer Auswahleinheit 4 bereitgestellt werden.

Die Auswahleinheit 4 stellt die Ausgangsspannungen $U_{out1}$, $U_{out2}$, $U_{out3}$ bzw. die Ausgangsspannungspotenziale $V_{out1}$, $V_{out2}$, $V_{out3}$ an jeweiligen $A_1$, $A_2$, $A_3$ -Ausgängen des Wechselrichters 1 zur Verfügung. Die Auswahleinheit 4 weist für jeden Ausgang des Wechselrichters 1 ein separates Auswahlelement 41 auf, das eingangsseitig mit den Zwischenpotenzialen $V_0$ bis $V_4$ verbunden ist und abhängig von einem von der Steuereinheit 5 für jedes Auswahlelement 41 bereitgestellten Steuersignal eines der Zwischenpotenziale $V_0$ bis $V_4$ auswählt und an den entsprechenden Ausgang $A_1$, $A_2$, $A_3$ als Ausgangsspannungspotenzial $V_{out1}$, $V_{out2}$, $V_{out3}$ bzw. als Ausgangsspannung $U_{out1}$, $U_{out2}$, $U_{out3}$ ausgibt. Im gezeigten Ausführungsbeispiel weist der Wechselrichter drei Ausgänge auf, denen jeweils ein Auswahlelement 41 zugeordnet ist, um die Ausgangsspannungen $U_{out1}$, $U_{out2}$, $U_{out3}$ bzw. die Ausgangsspannungspotenziale $V_{out1}$, $V_{out2}$, $V_{out3}$ zur Verfügung zu stellen.

Die Funktionsweise des gezeigten Wechselrichters 1 basiert im Wesentlichen darauf, die Einstelleinheiten 3 zum Bereitstellen der Zwischenspannung $U_1$ bis $U_4$ so anzusteuern, dass die Zwischenpotenziale $V_0$ bis $V_4$ bzw. die Zwischenspannungen $U_1$ bis $U_4$ zu jedem Zeitpunkt die gewünschten vorgegebenen Ausgangsspannungspotenziale $V_{out1}$, $V_{out2}$, $V_{out3}$ bzw. die gewünschten vorgegebenen Ausgangsspannungen $U_{out1}$, $U_{out2}$, $U_{out3}$ bereitstellen. D.h., mindestens eines der Zwischenpotenziale $V_0$ bis $V_4$ entspricht einem entsprechenden bereitzustellenden Ausgangsspannungspotenzial $V_{out1}$, $V_{out2}$, $V_{out3}$ bzw. mindestens eine der Zwischenspannungen $U_1$ bis $U_4$ entspricht einer entsprechenden bereitzustellenden Ausgangsspannung $U_{out1}$, $U_{out2}$, $U_{out3}$. Auf diese Weise können die Auswahlelemente 41 das entsprechende Ausgangsspannungspotenzial $V_{out1}$, $V_{out2}$, $V_{out3}$ bzw. die entsprechenden Ausgangsspannungen $U_{out1}$, $U_{out2}$, $U_{out3}$ zum Anlegen an die jeweils zugeordneten Ausgänge des Wechselrichters 1 auswählen.

Das Auswählen der Zwischenspannungen durch die Auswahlelemente 41 und das Einstellen der Einstelleinheiten 3 wird zyklisch bzw. periodisch durchgeführt, so dass sich im zeitlichen Verlauf die gewünschten Verläufe der Ausgangsspannungen $U_{out1}$, $U_{out2}$, $U_{out3}$ bzw. der Ausgangsspannungspotenziale $V_{out1}$, $V_{out2}$, $V_{out3}$ ergeben.

Im Ergebnis führt die Ansteuerung der Einstelleinheiten 3 durch die Steuereinheit 5 dazu, dass die Einstelleinheiten 3 jeweils abschnittsweise einen bestimmten Spannungsverlauf - gesteuert durch die Steuereinheit 5 — zur Verfügung stellen, so dass die Auswahlelemente 41 für einen bestimmten Zeitabschnitt jeweils mit einer der Zwischenspan-

nungsleitungen $6_0$ — $6_4$ verbunden sind, bevor diese zu einer weiteren Zwischenspannungsleitung $6_0$ — $6_4$ umschalten.

Die Steuereinheit 5 übernimmt die Ansteuerung der Einstelleinheiten 3 und der Auswahlelemente 41 der Auswahleinheit 4 so, dass ein bestimmter vorgegebener Ausgangsspannungsverlauf der Ausgangsspannungen $U_{OUT1}$ bis $U_{OUT3}$ bzw. Potenzialverlauf der Ausgangsspannungspotenziale $V_{out1}$, $V_{out2}$, $V_{out3}$, generiert wird.

Gemäß einem Verfahren zur Generierung der Ausgangsspannungen $U_{OUT1}$ - $U_{OUT3}$ kann zu jedem Zeitpunkt (Zyklus) eine Ermittlung der durch die Einstelleinheiten 3 einzustellenden Zwischenspannungen $U_1$ bis $U_4$ durchgeführt werden. Dazu kann beispielsweise folgendes Verfahren verwendet werden:

Zunächst wird anhand der Vorgabe für die gewünschten Ausgangsspannungspotenziale $V_{OUT1}$, $V_{OUT2}$, $V_{OUT3}$ das niedrigste Ausgangspotenzial als $V_{LOW}$, das mittlerer Ausgangspotenzial als $V_{MID}$ und das höchste Ausgangspotenzial als $V_{HIGH}$ ermittelt. Das niedrigste Ausgangspotenzial $V_{LOW}$ wird dann von der Zwischenpotenzialleitung $6_0$ bereitgestellt und das höchste Ausgangspotenzial $V_{HIGH}$ wird von der Zwischenpotenzialleitung $6_4$ bereitgestellt (vorausgesetzt, dass die Zwischenspannungen $U_Z$ der Einstelleinheiten 3 positiv sind). Die entsprechenden Schaltelemente 41 verbinden also denjenigen Ausgang mit der Zwischenpotenzialleitung $6_0$, an dem das niedrigste Ausgangspotenzial $V_{LOW}$ ausgegeben werden soll, und denjenigen Ausgang mit der Zwischenpotenzialleitung $6_4$, an dem das höchste Ausgangspotenzial $V_{HIGH}$ ausgegeben werden soll. Das mittlere Ausgangspotenzial $V_{MID}$ kann nun von einer der Zwischenpotenzialleitungen $6_1$, $6_2$ und $6_3$ bereitgestellt werden.

Um die von den Eingangsspannungsquellen 2 abzurufende Leistung möglichst gleich zu verteilen, ist nun vorgesehen, dass diejenige Zwischenpotenzialleitung aus den Zwischenpotenzialleitungen, die zwischen der Zwischenpotenzialleitung mit dem niedrigsten Potenzial und der Zwischenpotenzialleitung mit dem höchsten Potenzial liegen, ausgewählt wird, die nach der folgenden Regel ermittelt wird. Die Zwischenpotenzialleitung $6_X$ soll den mittleren Spannungswert für den verbleibenden Ausgang des Wechselrichters 1 generieren, wobei $1 \le X \le N$ - 1 mit N Anzahl der Eingangsspannungsquellen, im vorliegenden Fall entspricht N = 4. Dann gilt:

$$X = \text{Floor } (1 + r (N - 1)),$$

wobei $r = (V_{MID}$ — $V_{LOW})/(V_{HIGH}$ — $V_{LOW})$ entspricht. Als Zwischenspannungen werden entsprechend eingestellt $U_1$ ... $U_X = (V_{MID}$ — $V_{LOW})/X$ und $U_{X+1}$... $U_{N-1} = (V_{HIGH}$ — $U_{MID})/(N$ — $X)$. Die Zwischenpotenzialleitung $6_X$ wird entsprechend zum Verbinden mit dem Ausgang $A_1$, $A_2$, $A_3$ durch das dem Ausgang $A_1$, $A_2$, $A_3$ zugeordnete Auswahlelement 41 ausgewählt, an dem das mittlere Ausgangspotenzial ausgegeben werden soll.

Dieses Verfahren wird zyklisch gemäß einer Einstellfrequenz der Einstelleinheiten 3 ausgeführt, die den Zyklus des Einstellens der jeweiligen Zwischenspannung beschreibt. Die Einstellfrequenz richtet sich nach der gewünschten Welligkeit bzw. Genauigkeit der gewünschten Ausgangsspannungen bzw. Ausgangsspannungspotenziale.

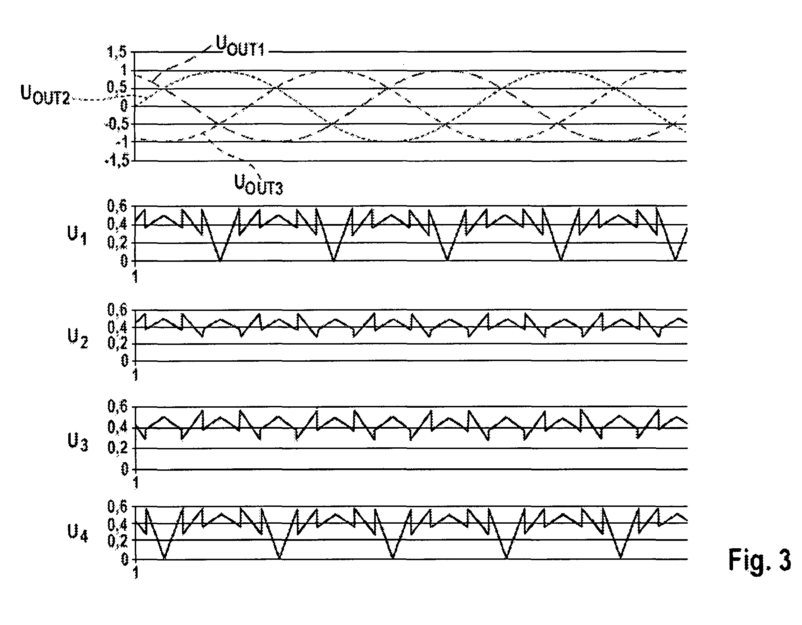

In Fig. 3 sind drei Ausgangsspannung $U_{out1}$, $U_{out2}$, $U_{out3}$, die als drei um 120° versetzte Phasenspannungen bereitgestellt werden sollen, dargestellt. Zum Generieren der Ausgangsspannungen $U_{out1}$, $U_{out2}$, $U_{out3}$ sind die Verläufe der einzelnen Zwischenspannungen $U_1$ bis $U_4$, die von den einzelnen Einstelleinheiten 3 gemäß der Ansteuerung der Steuereinheit 5 entsprechend dem obigen Verfahren erzeugt werden.

Bei Anwendung des obigen Verfahrens erreicht man eine möglichst gute Verteilung der Last auf die einzelnen Eingangsspannungsquellen 2. Zudem ist die Schaltfrequenz der Auswahlelemente 41 gering, da ein Schalten der Auswahlelemente 41 in der Regel erst bei einer Änderung der Zuordnung zwischen dem jeweiligen Ausgang $A_1$, $A_2$, $A_3$ und den zugehörigen höchsten, mittleren und niedrigsten Ausgangspotenzialen $V_{HIGH}$, $V_{MID}$, $V_{LOW}$ notwendig ist.

Das oben beschriebene Verfahren entspricht einer bestimmten Strategie, mit der die Steuereinheit 5 den Wechselrichter 1 ansteuern kann, um möglichst geringe Spannungen als Zwischenspannungen $U_1$ — $U_4$ zu erreichen. Da aufgrund der Reihenschaltung aller Zwischenspannungen $U_1$ — $U_4$ durch jede der Einstelleinheiten 3 der gleiche Strom fließt, kann somit die Leistung jeder der Eingangsspannungsquellen 2 möglichst gering gehalten werden und weiterhin die Belastung der einzelnen Eingangsspannungsquellen 2 möglichst gleichmäßig verteilt werden.

Weiterhin ist es auch nicht notwendig, die Zwischenpotenzialleitung mit dem niedrigsten Zwischenpotenzial und die Potenzialleitung mit dem höchsten Zwischenpotenzial an Ausgänge des Wechselrichters anzulegen. Andere Strategien können z.B. vorsehen, möglichst große Zwischenspannungen $U_1$ bis $U_4$ zu generieren, z.B. durch die Auswahl möglichst nahe beieinanderliegender Zwischenpotenzialleitungen $6_0$ — $6_4$ für das höchste und das niedrigste Ausgangspotenzial. Alternativ kann vorgesehen sein, ganz bestimmte absolute Werte als Zwischenspannungen $U_1$ bis $U_4$ zu verwenden, z.B. Zwischenspannungen, die bevorzugte Betriebspunkte der Einstellschaltungen 3 bzw. der Eingangsspannungsquellen 2 darstellen.

Insbesondere durch das ausgangsseitige Kurzschließen der Einstelleinheiten (Zwischenspannung 0 V) können einzelne Eingangsspannungsquellen 2 abgeschaltet werden, wenn diese gewechselt oder gewartet werden sollen bzw. aufgrund eines Fehlers ausgefallen sind. Die Funktionsfähigkeit des Wechselrichters 1 wird davon nicht beeinträchtigt, wenn die Steuereinheit 5 dies in ihrer Steuerstrategie berücksichtigt, z.B. indem die betreffende Zwischenspannung mit 0 V fest vorgegeben und das obige Verfahren unter Auslassen der betreffenden Zwischenspannung durchgeführt wird. Es ist damit möglich, den Wechselrichter 1 selbst bei Ausfall oder Ausschalten einer oder mehrerer Eingangsspannungsquellen weiter zu betreiben, ohne dass besondere Maßnahmen getroffen werden müssen. Es ist dazu lediglich eine Rückmeldungsleitung von den einzelnen Eingangsspannungsquellen 2 bzw. von der Eingangsseite der Einstelleinheiten 3 vorzusehen, die den momentanen Zustand der Eingangsspannungsquelle 2 bzw. eine Angabe über den momentanen Wert der Eingangsspannung $U_{IN1}$ bis $U_{IN4}$ der Steuereinheit 5 bereitstellt.

Da jedoch jede der Einstelleinheiten 3 mit einer Eingangsspannungsquelle 2 verbunden ist, die nur einen geringen Teil der maximal möglichen maximalen Ausgangsspannung darstellt, sind die Anforderungen an die Ausbildung der Einstelleinheiten 3 deutlich geringer als bei einem herkömmlichen DC-Inverter-Wechselrichter.

Das obige Verfahren ist insbesondere dafür geeignet, die Eingangsspannungsquelle in gleichem Maße zu belasten. Da alle Zwischenspannungen in Reihe geschaltet sind, fließt durch die Eingangsspannungsquellen 2 der gleiche Strom. Der Anteil der Gesamtleistung, die jede Eingangsspannungsquelle 2 bereitzustellen hat, ist damit lediglich abhängig von der bereitgestellten Zwischenspannung, d.h. proportional zur von der betreffenden Einstelleinheit bereitgestellten Zwischenspannung. Wird eine gewünschte Ausgangsspannung durch das Zusammenwirken mehrerer Eingangsspannungsquellen erzeugt, wie es bei dem oben beschriebenen Verfahren der Fall ist, so ist bislang vorgesehen, jede der betreffenden Einstelleinheiten 3 die gleiche Spannung ausgeben zu lassen, um so die von den Eingangsspannungsquellen 2 bereitgestellte Leistung gleich zu verteilen und eine gleichmäßige Lastverteilung zu erreichen. Die Steuereinheit 5 kann jedoch auch vorsehen, die Leistung zu kontrollieren und so z.B. den Anteil der Leistung auf die verschiedenen Eingangsspannungsquellen 2 in unterschiedlichem Maße aufzuteilen. Dadurch kann eine definierte Lastverteilung erreicht werden. So kann beispielsweise vorgesehen sein, dass eine erste der Einstelleinheiten 3 eine höhere Zwischenspannung bereitstellt als eine zweite der Einstelleinheiten 3, obwohl diese gleichermaßen für das Bereitstellen einer Ausgangsspannung bzw. eines Ausgangsspannungspotenzials vorgesehen sind. Das Verhältnis der von der ersten und der zweiten Einstelleinheit 3 bereitgestellten Zwischenspannungen entspricht einem vorgegebenen Verhältnis der Lasten bzw. der von den zugeordneten Eingangsspannungsquellen 2 bereitgestellten Leistung. Auf diese Weise kann die Leistung in diesem Arbeitspunkt bzw. zu diesem Zeitpunkt (Zyklus) unterschiedlich verteilt werden.

**Bezugszeichenliste**

| | |
|---|---|
| 1 | Wechselrichter |
| 2 | Eingangsspannungsquelle |
| 3 | Einstelleinheit |
| 4 | Auswahleinheit |
| 5 | Steuereinheit |
| 6 | Zwischenpotenzialleitung |
| 31 | Pull-High-Transistor |
| 32 | Pull-Low-Transistor |
| 33 | Kondensator |
| 41 | Auswahlelement |
| $U_1, U_2, U_3, U_4$ | Zwischenspannung |
| $V_0, V_1, V_2, V_3, V_4$ | Zwischenspannungspotenzial |
| $U_{IN1}, U_{IN2}, U_{IN3}, U_{IN4}$ | Eingangsspannung |
| $V_{OUT1}, V_{OUT2}, V_{OUT3}$ | Ausgangsspannungspotenzial |
| $A_1, A_2, A_3$ | Ausgang |

**Patentansprüche**

1. Wandlervorrichtung zum Bereitstellen von mehreren Ausgangsspannungen bzw. mehreren Ausgangsspannungspotenzialen an entsprechenden Ausgängen ($A_1$, $A_2$, $A_3$) umfassend:

   - mehrere Einstelleinheiten (3), die jeweils einer von mehreren Eingangsspannungsquellen (2) zugeordnet sind, wobei jede der Einstelleinheiten (3) ausgebildet ist, um eine von der zugeordneten Eingangsspannungsquelle (2) bereitgestellte Eingangsspannung ($U_{IN1}$, $U_{IN2}$, $U_{IN3}$, $U_{IN4}$) zu variieren und eine Zwischenspannung ($U_1$, $U_2$, $U_3$, $U_4$) bereitzustellen;
   - mehrere Auswahlelemente (41), wobei an jedes Auswahlelement (41) durch die Zwischenspannungen ($U_1$, $U_2$, $U_3$, $U_4$) definierte Zwischenspannungspotenziale ($V_0$, $V_1$, $V_2$, $V_3$, $V_4$) angelegt sind und jedes Auswahlelement (41) ausgebildet ist, eines der Zwischenspannungspotenziale ($V_0$, $V_1$, $V_2$, $V_3$, $V_4$) zum Ausgeben als das jeweilige Ausgangsspannungspotenzial ($V_{OUT1}$, $V_{OUT2}$, $V_{OUT3}$) auszuwählen; **dadurch gekennzeichnet, dass**

- Spannungsausgänge der Einstelleinheiten (3) seriell miteinander verbunden sind, so dass sich die Zwischenspannungen ($U_1$, $U_2$, $U_3$, $U_4$) addieren und an einem Teil oder jedem der Spannungsausgänge das jeweilige Zwischenspannungspotenzial ($V_0$, $V_1$, $V_2$, $V_3$, $V_4$) zur Auswahl durch ein jeweiliges der Auswahlelemente (41) bereitgestellt wird, und dass

- eine Steuereinheit (5) vorhanden ist, die ausgebildet ist, um die mehreren Einstelleinheiten (3) anzusteuern, so dass die Einstelleinheiten (3) Zwischenspannungspotenziale ($V_0$, $V_1$, $V_2$, $V_3$, $V_4$) bereitstellen, die die bereitzustellenden Ausgangsspannungspotenziale ($V_{OUT1}$, $V_{OUT2}$, $V_{OUT3}$) enthalten,

wobei die Steuereinheit (5) weiterhin ausgebildet ist, um jeweils eines der Zwischenspannungspotenziale ($V_0$, $V_1$, $V_2$, $V_3$, $V_4$) auszuwählen und an einem entsprechenden Ausgang ($A_1$, $A_2$, $A_3$) bereitzustellen.

2. Wandlervorrichtung (1) nach Anspruch 1,
   wobei die Steuereinheit (5) ausgebildet ist, um die Auswahlelemente (41) anzusteuern, so dass das niedrigste von den Einstelleinheiten (3) bereitgestellte Zwischenspannungspotenzial ($V_0$, $V_1$, $V_2$, $V_3$, $V_4$) zum Bereitstellen des niedrigsten Ausgangsspannungspotenzial ($V_{OUT1}$, $V_{OUT2}$, $V_{OUT3}$) und das höchste von den Einstelleinheiten (3) bereitgestellte Zwischenspannungspotenzial ($V_0$, $V_1$, $V_2$, $V_3$, $V_4$) zum Bereitstellen des höchsten Ausgangsspannungspotenzials ($V_{OUT1}$, $V_{OUT2}$, $V_{OUT3}$) ausgewählt wird.

3. Wandlervorrichtung (1) nach Anspruch 1 oder 2,
   wobei die Steuereinheit (5) ausgebildet ist, um die Einstelleinheiten (3) anzusteuern, so dass bei in Reihe verschalteten Zwischenspannungen ($U_1$, $U_2$, $U_3$, $U_4$) die addierten Zwischenspannungen ($U_1$, $U_2$, $U_3$, $U_4$) eine Spannung ergeben, die der Spannung zwischen dem höchsten bereitzustellenden Ausgangsspannungspotenzial ($V_{OUT1}$, $V_{OUT2}$, $V_{OUT3}$) und dem niedrigsten bereitzustellenden Ausgangsspannungspotenzial ($V_{OUT1}$, $V_{OUT2}$, $V_{OUT3}$) entspricht.

4. Wandlervorrichtung (1) nach Anspruch 3,
   wobei die Steuereinheit (5) ausgebildet ist, um die Einstelleinheiten (3) anzusteuern, so dass ein mittleres der Ausgangsspannungspotenziale ($V_{OUT1}$, $V_{OUT2}$, $V_{OUT3}$) durch Auswählen eines der mittleren Zwischenspannungspotenziale ($V_0$, $V_1$, $V_2$, $V_3$, $V_4$) bereitgestellt wird.

5. Wandlervorrichtung (1) nach Anspruch 4
   wobei die Steuereinheit (5) ausgebildet ist, um die Einstelleinheiten (3) anzusteuern, so dass das mittlere Zwischenspannungspotenzial ($V_0$, $V_1$, $V_2$, $V_3$, $V_4$) an einem ausgewählten Spannungsausgang einer der Einstelleinheiten (3) generiert wird.

6. Wandlervorrichtung (1) nach Anspruch 5, wobei die Steuereinheit (5) ausgebildet ist, um den Spannungsausgang einer der Einstelleinheiten (3) abhängig von einer gewünschten Lastverteilung der den Einstelleinheiten (3) zugeordneten Eingangsspannungsquellen (2) auszuwählen, wobei insbesondere das Verhältnis der Zwischenspannungen ($U_1$, $U_2$, $U_3$, $U_4$) der einzelnen Einstelleinheiten (3) der gewünschten Lastverteilung der entsprechenden Einstelleinheiten (3) entspricht.

7. Wandlervorrichtung (1) nach Anspruch 5,
   wobei die Steuereinheit (5) ausgebildet ist, um den Spannungsausgang einer der Einstelleinheiten (3) auszuwählen, indem die Spannungsdifferenz zwischen dem höchsten und dem niedrigsten Ausgangsspannungspotenzial ($V_{OUT1}$, $V_{OUT2}$, $V_{OUT3}$) durch die Anzahl der verfügbaren Einstelleinheiten (3) dividiert wird und der Spannungsausgang derjenigen Einstelleinheit zum Bereitstellen eines der mittleren Ausgangsspannungspotenziale ($V_{OUT1}$, $V_{OUT2}$, $V_{OUT3}$) ausgewählt wird, der dem bereitzustellenden Ausgangsspannungspotenzial ($V_{OUT1}$, $V_{OUT2}$, $V_{OUT3}$) am nächsten liegt.

8. Wandlervorrichtung (1) nach einem der Ansprüche 5 bis 7,
   wobei die Steuereinheit (5) ausgebildet ist, um die Einstelleinheiten (3) anzusteuern, so dass das mittlere Zwischenspannungspotenzial ($V_0$, $V_1$, $V_2$, $V_3$, $V_4$) generiert wird, indem

   - eine erste Gruppe von einer oder mehreren Einstelleinheiten (3), die zwischen dem ausgewählten Spannungsausgang und dem Spannungsausgang des höchsten Zwischenspannungspotenzials ($V_0$, $V_1$, $V_2$, $V_3$, $V_4$) angeordnet sind, jeweils eine Zwischenspannung ($U_1$, $U_2$, $U_3$, $U_4$) bereitstellen, die der Spannungsdifferenz zwischen dem bereitzustellenden Ausgangsspannungspotenzial ($V_{OUT1}$, $V_{OUT2}$, $V_{OUT3}$) und dem höchsten bereitzustellenden Ausgangsspannungspotenzial ($V_{OUT1}$, $V_{OUT2}$, $V_{OUT3}$) dividiert durch die Anzahl der Einstelleinheiten (3) der ersten Gruppe entspricht, und
- eine zweite Gruppe von Einstelleinheiten (3), die zwischen dem ausgewählten Spannungsausgang und dem Spannungsausgang des niedrigsten Zwischenspannungspotenzials ($V_0$, $V_1$, $V_2$, $V_3$, $V_4$) angeordnet sind, die jeweils eine Zwischenspannung bereitstellen, die der Spannungsdifferenz zwischen dem bereitzustellenden Ausgangsspannungspotenzial ($V_{OUT1}$, $V_{OUT2}$, $V_{OUT3}$) und dem niedrigsten bereitzustellenden Ausgangsspannungspotenzial ($V_{OUT1}$, $V_{OUT2}$, $V_{OUT3}$), dividiert durch die Anzahl der Einstelleinheiten (3) der zweiten Gruppe entspricht.

9. Wandlervorrichtung (1) nach einem der Ansprüche 1 bis 8,
wobei die Steuereinheit (5) ausgebildet ist, um zum Bereitstellen der Ausgangsspannungen das Variieren der Zwischenspannungen ($U_1$, $U_2$, $U_3$, $U_4$) der Einstelleinheiten (3) zyklisch oder kontinuierlich durchzuführen, so dass die Zwischenspannungen ($U_1$, $U_2$, $U_3$, $U_4$) kontinuierlich oder in aufeinanderfolgenden Zeitfenstern bereitgestellt werden.

10. Verfahren zum Betreiben einer Wandlervorrichtung nach Anspruch 1, mit folgenden Schritten:

- Ansteuern der mehreren Einstelleinheiten (3), so dass die Einstelleinheiten (3) Zwischenspannungspotenziale bereitstellen, die die bereitzustellenden Ausgangsspannungspotenziale ($V_{OUT1}$, $V_{OUT2}$, $V_{OUT3}$) enthalten,
- Ansteuern der Auswahlelemente (41), so dass jeweils eines der Zwischenspannungspotenziale ($V_0$, $V_1$, $V_2$, $V_3$, $V_4$) ausgewählt und an einem entsprechenden Ausgang ($A_1$, $A_2$, $A_3$) bereitgestellt wird.

**Claims**

1. Converter apparatus for producing a plurality of output voltages or a plurality of output voltage potentials at corresponding outputs ($A_1$, $A_2$, $A_3$) comprising:

   - a plurality of setting units (3), which are each associated with one of a plurality of input voltage sources (2), with each of the setting units (3) being designed to vary an input voltage ($U_{IN1}$, $U_{IN2}$, $U_{IN3}$, $U_{IN4}$) which is produced by the associated input voltage source (2), and to provide an intermediate voltage ($U_1$, $U_2$, $U_3$, $U_4$)
   - a plurality of selection elements (41), with intermediate voltage potentials ($V_0$, $V_1$, $V_2$, $V_3$, $V_4$), which are defined by the intermediate voltages ($U_1$, $U_2$, $U_3$, $U_4$), being applied to each selection element (41), and with each selection element (41) being designed to select one of the intermediate voltage potentials ($V_0$, $V_1$, $V_2$, $V_3$, $V_4$) for outputting as the respective output voltage potential ($V_{OUT1}$, $V_{OUT2}$, $V_{OUT3}$); **characterized in that**
   - voltage outputs of the setting units (3) are connected to one another in series such that the intermediate voltages ($U_1$, $U_2$, $U_3$, $U_4$) are added, and the respective intermediate voltage potential ($V_0$, $V_1$, $V_2$, $V_3$, $V_4$) is produced at some or each of the voltage outputs, for selection by a respective one of the selection elements (41), and **in that**
   - a control unit (5) is present which is designed to control the plurality of setting units (3) such that the setting units (3) produce intermediate voltage potentials ($V_0$, $V_1$, $V_2$, $V_3$, $V_4$) which contain the output voltage potentials ($V_{OUT1}$, $V_{OUT2}$, $V_{OUT3}$) to be produced, with the control unit (5) furthermore being designed to select in each case one of the intermediate voltage potentials ($V_0$, $V_1$, $V_2$, $V_3$, $V_4$) and to produce it at a corresponding output ($A_1$, $A_2$, $A_3$).

2. Converter apparatus (1) according to Claim 1, with the control unit (5) being designed to control the selection elements (41) such that the lowest intermediate voltage potential ($V_0$, $V_1$, $V_2$, $V_3$, $V_4$) produced by the setting units (3) is selected to produce the lowest output voltage potential ($V_{OUT1}$, $V_{OUT2}$, $V_{OUT3}$), and the highest intermediate voltage potential ($V_0$, $V_1$, $V_2$, $V_3$, $V_4$) produced by the setting units (3) is selected to produce the highest output voltage potential ($V_{OUT1}$, $V_{OUT2}$, $V_{OUT3}$).

3. Converter apparatus (1) according to Claim 1 or 2, with the control unit (5) being designed to control the setting units (3) such that, when intermediate voltages ($U_1$, $U_2$, $U_3$, $U_4$) are connected in series, the added intermediate voltages ($U_1$, $U_2$, $U_3$, $U_4$) result in a voltage which corresponds to the voltage between the highest output voltage potential ($V_{OUT1}$, $V_{OUT2}$, $V_{OUT3}$) to be produced and the lowest output voltage potential ($V_{OUT1}$, $V_{OUT2}$, $V_{OUT3}$) to be produced.

4. Converter apparatus (1) according to Claim 3, with the control unit (5) being designed to control the setting units (3) such that a mean of the output voltage potentials ($V_{OUT1}$, $V_{OUT2}$, $V_{OUT3}$) is produced by selection of one of the mean intermediate voltage potentials ($V_0$, $V_1$, $V_2$, $V_3$, $V_4$).

5. Converter apparatus (1) according to Claim 4, with the control unit (5) being designed to control the setting units (3) such that the mean intermediate voltage potential ($V_0$, $V_1$, $V_2$, $V_3$, $V_4$) is generated at a selected voltage output of one of the setting units (3).

6. Converter apparatus (1) according to Claim 5, with the control unit (5) being designed to select the voltage output of one of the setting units (3) as a function of a desired load distribution of the input voltage sources (2) which are associated with the setting units (3), in particular with the ratio of the intermediate voltages ($U_1$, $U_2$, $U_3$, $U_4$) of the individual setting units (3) corresponding to the desired load distribution of the corresponding setting units (3).

7. Converter apparatus (1) according to Claim 5, with the control unit (5) being designed to select the voltage output of one of the setting units (3) by dividing the voltage difference between the highest and the lowest output voltage potential ($V_{OUT1}$, $V_{OUT2}$, $V_{OUT3}$) by the number of available setting units (3), and with the voltage output of that setting unit which is closer to the output voltage potential ($V_{OUT1}$, $V_{OUT2}$, $V_{OUT3}$) to be produced being selected to produce one of the mean output voltage potentials ($V_{OUT1}$, $V_{OUT2}$, $V_{OUT3}$).

8. Converter apparatus (1) according to one of Claims 5 to 7,
with the control unit (5) being designed to control the setting units (3) such that the mean intermediate voltage potential ($V_0$, $V_1$, $V_2$, $V_3$, $V_4$) is generated in that

   - a first group of one or more setting units (3), which is or are arranged between the selected voltage output and the voltage output of the highest intermediate voltage potential ($V_0$, $V_1$, $V_2$, $V_3$, $V_4$), each produce an intermediate voltage ($U_1$, $U_2$, $U_3$, $U_4$) which corresponds to the voltage difference between the output voltage potential ($V_{OUT1}$, $V_{OUT2}$, $V_{OUT3}$) to be produced and the highest output voltage potential ($V_{OUT1}$, $V_{OUT2}$, $V_{OUT3}$) to be produced divided by the number of setting units (3) in the first group, and
   - a second group of setting units (3), which are arranged between the selected voltage output and the voltage output of the lowest intermediate voltage potential ($V_0$, $V_1$, $V_2$, $V_3$, $V_4$), which each produce an intermediate voltage which corresponds to the voltage difference between the output voltage potential ($V_{OUT1}$, $V_{OUT2}$, $V_{OUT3}$) to be produced and the lowest output voltage potential ($V_{OUT1}$, $V_{OUT2}$, $V_{OUT3}$) to be produced, divided by the number of setting units (3) in the second group.

9. Converter apparatus (1) according to one of Claims 1 to 8,
with the control unit (5) being designed to vary the intermediate voltages ($U_1$, $U_2$, $U_3$, $U_4$) of the setting units (3) cyclically or continuously in order to produce the output voltages, such that the intermediate voltages ($U_1$, $U_2$, $U_3$, $U_4$) are produced continuously or in successive time windows.

10. Method for operation of a converter apparatus according to Claim 1, having the following steps:

   - control of the plurality of setting units (3) such that the setting units (3) produce intermediate voltage potentials which contain the output voltage potentials ($V_{OUT1}$, $V_{OUT2}$, $V_{OUT3}$) to be produced,
   - control of the selection elements (41) such that in each case one of the intermediate voltage potentials ($V_0$, $V_1$, $V_2$, $V_3$, $V_4$) is selected, and is produced at a corresponding output ($A_1$, $A_2$, $A_3$).

**Revendications**

1. Dispositif transducteur destiné à fournir une pluralité de tensions de sortie et une pluralité de potentiels de tension de sortie sur des sorties respectives ($A_1$, $A_2$, $A_3$), comprenant :

   - une pluralité d'unités de réglage (3) qui sont respectivement associées à l'une d'une pluralité de sources de tension d'entrée (2), chacune des unités de réglage (3) étant conçue de manière à faire varier une tension d'entrée ($U_{IN1}$, $U_{IN2}$, $U_{IN3}$, $U_{IN4}$) fournie par la source de tension d'entrée associée (2) et à fournir une tension intermédiaire ($U_1$, $U_2$, $U_3$, $U_4$);
   - une pluralité d'éléments de sélection (41), des potentiels de tension intermédiaires ($V_0$, $V_1$, $V_2$, $V_3$, $V_4$) définis par les tensions intermédiaires ($U_1$, $U_2$, $U_3$, $U_4$) étant appliqués à chaque élément de sélection (41), et chaque élément de sélection (41) étant conçu pour sélectionner l'un des potentiels de tension intermédiaires ($V_0$, $V_1$, $V_2$, $V_3$, $V_4$) pour le fournir en sortie en tant que potentiel de tension de sortie respectif ($V_{OUT1}$, $V_{OUT2}$, $V_{OUT3}$); **caractérisé en ce que**

- des sorties de tension des unités de réglage (3) sont connectées les unes aux autres en série de manière à ce que les tensions intermédiaires ($U_1$, $U_2$, $U_3$, $U_4$) s'additionnent et à ce que le potentiel de tension intermédiaire ($V_0$, $V_1$, $V_2$, $V_3$, $V_4$) respectif soit fourni pour la sélection par l'un respectif des éléments de sélection (41) sur une partie ou chacune des sorties de tension, et **en ce**

- **qu'**il est prévu une unité de commande (5) qui est conçue de manière à commander la pluralité d'unités de réglage (3) afin que les unités de réglage (3) fournissent des potentiels de tension intermédiaires ($V_0$, $V_1$, $V_2$, $V_3$, $V_4$) qui contiennent les potentiels de tension de sortie ($V_{OUT1}$, $V_{OUT2}$, $V_{OUT3}$) devant être fournis, l'unité de commande (5) étant en outre conçue de manière à sélectionner respectivement l'un des potentiels de tension intermédiaires ($V_0$, $V_1$, $V_2$, $V_3$, $V_4$) et à le fournir sur une sortie correspondante ($A_1$, $A_2$, $A_3$).

2. Dispositif transducteur (1) selon la revendication 1, dans lequel l'unité de commande (5) est conçue pour commander les éléments de sélection (41) de manière à sélectionner le potentiel de tension intermédiaire ($V_0$, $V_1$, $V_2$, $V_3$, $V_4$) le plus faible fourni par les unités de réglage (3) afin de fournir le potentiel de tension de sortie ($V_{OUT1}$, $V_{OUT2}$, $V_{OUT3}$) le plus faible et à sélectionner le potentiel de tension intermédiaire ($V_0$, $V_1$, $V_2$, $V_3$, $V_4$) le plus élevé fourni par les unités de réglage (3) afin de fournir le potentiel de tension de sortie ($V_{OUT1}$, $V_{OUT2}$, $V_{OUT3}$) le plus élevé.

3. Dispositif transducteur (1) selon la revendication 1 ou 2, dans lequel l'unité de commande (5) est conçue pour commander les unités de réglage (3) de telle manière que lorsque les tensions intermédiaires ($U_1$, $U_2$, $U_3$, $U_4$) sont connectées en série, les tensions intermédiaires additionnées ($U_1$, $U_2$, $U_3$, $U_4$) donnent une tension qui correspond à une tension comprise entre le potentiel de tension de sortie ($V_{OUT1}$, $V_{OUT2}$, $V_{OUT3}$) le plus élevé devant être fourni et le potentiel de tension de sortie ($V_{OUT1}$, $V_{OUT2}$, $V_{OUT3}$) le plus faible devant être fourni.

4. Dispositif transducteur (1) selon la revendication 3, dans lequel l'unité de commande (5) est conçue pour commander les unités de réglage (3) de manière à fournir une moyenne des potentiels de tension de sortie ($V_{OUT1}$, $V_{OUT2}$, $V_{OUT3}$) par sélection de l'un des potentiels de tension intermédiaires moyens ($V_0$, $V_1$, $V_2$, $V_3$, $V_4$).

5. Dispositif transducteur (1) selon la revendication 4, dans lequel l'unité de commande (5) est conçue pour commander les unités de réglage (3) de manière à générer le potentiel de tension intermédiaire moyen ($V_0$, $V_1$, $V_2$, $V_3$, $V_4$) sur une sortie de tension sélectionnée de l'une des unités de réglage (3).

6. Dispositif transducteur (1) selon la revendication 5, dans lequel l'unité de commande (5) est conçue pour sélectionner la sortie de tension de l'une des unités de réglage (3) en fonction d'une répartition de charge souhaitée des sources de tension d'entrée (2) associées aux unités de réglage (3), le rapport des tensions intermédiaires ($U_1$, $U_2$, $U_3$, $U_4$) des unités de réglage (3) individuelles correspondant notamment à la répartition de charge souhaitée des unités de réglage (3) correspondantes.

7. Dispositif transducteur (1) selon la revendication 5, dans lequel l'unité de commande (5) est conçue pour sélectionner la sortie de tension de l'une des unités de réglage (3) en divisant la différence de tension entre les potentiels de tension de sortie ($V_{OUT1}$, $V_{OUT2}$, $V_{OUT3}$) le plus élevé et le plus faible par le nombre des unités de réglage (3) disponibles et en sélectionnant la sortie de tension de celle des unités de réglage qui fournit l'un des potentiels de tension de sortie moyens ($V_{OUT1}$, $V_{OUT2}$, $V_{OUT3}$) se situant le plus près du potentiel de tension de sortie ($V_{OUT1}$, $V_{OUT2}$, $V_{OUT3}$) devant être fourni.

8. Dispositif transducteur (1) selon l'une quelconque des revendications 5 à 7, dans lequel l'unité de commande (5) est conçue pour commander les unités de réglage (3) de manière à générer le potentiel de tension intermédiaire moyen ($V_0$, $V_1$, $V_2$, $V_3$, $V_4$), dans lequel

- un premier groupe d'une ou plusieurs unités de réglage (3), qui sont disposées entre la sortie de tension sélectionnée et la sortie de tension du potentiel de tension intermédiaire ($V_0$, $V_1$, $V_2$, $V_3$, $V_4$) le plus élevé, fournit respectivement une tension intermédiaire ($U_1$, $U_2$, $U_3$, $U_4$) correspondant à la différence de tension entre le potentiel de tension de sortie ($V_{OUT1}$, $V_{OUT2}$, $V_{OUT3}$) devant être fourni et le potentiel de tension de sortie ($V_{OUT1}$, $V_{OUT2}$, $V_{OUT3}$) devant être fourni le plus élevé, divisée par le nombre des unités de réglage (3) du premier groupe, et

- un second groupe d'unités de réglage (3), qui sont disposées entre la sortie de tension sélectionnée et la sortie de tension du potentiel de tension intermédiaire ($V_0$, $V_1$, $V_2$, $V_3$, $V_4$) le plus faible, qui fournit respectivement une tension intermédiaire correspondant à la différence de tension entre le potentiel de tension de sortie ($V_{OUT1}$, $V_{OUT2}$, $V_{OUT3}$) devant être fourni et le potentiel de tension de sortie ($V_{OUT1}$, $V_{OUT2}$, $V_{OUT3}$) devant être fourni le plus faible, divisée par le nombre des unités de réglage (3) du second groupe.

9. Dispositif transducteur (1) selon l'une quelconque des revendications 1 à 8, dans lequel l'unité de commande (5) est conçue pour faire varier cycliquement ou en continu les tensions intermédiaires ($U_1$, $U_2$, $U_3$, $U_4$) des unités de réglage (3) pour fournir les tensions de sortie, de manière à fournir les tensions intermédiaires ($U_1$, $U_2$, $U_3$, $U_4$) en continu ou dans des fenêtres temporelles consécutives.

10. Procédé de mise en fonctionnement d'un dispositif transducteur selon la revendication 1, comprenant les étapes suivantes :

- commander la pluralité d'unités de réglage (3) de manière à ce que les unités de réglage (3) fournissent des potentiels de tension intermédiaires contenant les potentiels de tension de sortie ($V_{OUT1}$, $V_{OUT2}$, $V_{OUT3}$),
- commander les éléments de sélection (41) de manière à sélectionner l'un respectif des potentiels de tension intermédiaires ($V_0$, $V_1$, $V_2$, $V_3$, $V_4$) et à le fournir sur une sortie correspondante ($A_1$, $A_2$, $A_3$).

Fig. 1

## Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6104624 A

- US 20080150366 A1

**In der Beschreibung aufgeführte Nicht-Patentliteratur**

- **CALAIS M. et al.** Multilevel converters for single-phase grid connected photovoltaic systems-an overview. *ISIE,* 1998